# EUROPÄISCHE PATENTSCHRIFT

(11) **EP 0 450 576 B1**
(45) Veröffentlichungstag und Bekanntmachung des Hinweises auf die Patenterteilung: **23.06.1993**
(21) Anmeldenummer: 91105203.3
(22) Anmeldetag: 02.04.1991
(51) Int. Cl.: B60G 15/07

(54) **Karosserieseitige Lagerung eines Federbeins sowie Verfahren zur Herstellung einer solchen Lagerung**
Bodywork side mounting of a spring and damper unit and method of manufacturing such a mounting
Support d'une jambe de suspension au niveau de la carrosserie et procédé pour sa fabrication

(30) Priorität: 02.04.1990 DE 4010508
(43) Veröffentlichungstag der Anmeldung: 09.10.1991
(73) Patentinhaber: Volkswagen Aktiengesellschaft, 38436 Wolfsburg (DE)
(72) Erfinder: Engel, Michael, Dipl.-Ing., W-3170 Gifhorn (DE)

(56) Entgegenhaltungen:
- DE-A- 3 041 985
- DE-A- 3 829 376

## Beschreibung

Die Erfindung betrifft eine karosserieseitige Lagerung eines Federbeins oder Federdämpfers eines Kraftfahrzeuges der im Oberbegriff des Patentanspruchs 1 genannten Art sowie ein Verfahren zu ihrer Herstellung. Eine derartige karosserieseitige Lagerung ist aus der DE-A-3 829 376 bekannt. Andere karosserieseitige Lagerungen sind beispielsweise aus den DE-A 27 45 380 und DE-A 30 41 985 sowie aus der US-A 4 248 454 bekannt.

Soweit Federbeine oder Federdämpfer mit auf der Dämpfer-Kolbenstange abgestützter Federvorrichtung für gelenkte Räder, insbesondere gelenkte Vorderräder eines Kraftfahrzeuges eingesetzt werden, ist zwischen dem das karosserieseitige Ende der Federvorrichtung tragenden, auf der Dämpfer-Kolbenstange gelagerten oberen Federteller und dem die Verbindung zur Karosserie des Fahrzeugs herstellenden, vorzugsweise als überwiegend auf Schub beanspruchbares Gummi-Metall-Lager ausgebildeten Federbeinlager ein Axial-Rillenkugellager angeordnet, welches die für Lenkbewegungen der Räder erforderlichen Verdrehungen des Federbeins relativ zur Karosserie ermöglicht.

Dieses Axial-Rillenkugellager ist üblicherweise durch eine Pressverbindung fest mit dem Blechinnentopf bzw. der federbeinseitigen Lagerhülse des Gummi-Metall-Lagers verbunden, und zwar entweder direkt (z. B. US-A 4 248 454) oder unter Zwischenschaltung eines seinerseits fest in das Gummi-Metall-Lager eingepreßten unteren Anschlagtopfes (z. B. DE-A 27 45 380, DE-A 30 41 985).

Die Federbeine bzw. Federdämpfer werden dem Fahrzeughersteller bisher üblicherweise als einbaufertige komplette Baueinheiten mit auf das Kolbenstangenende bzw. auf das dort befindliche Axial-Rillenkugellager aufgepreßtem Federbein- bzw. Gummi-Metall-Lager angeliefert.

Bei in Großserien hergestellten Kraftfahrzeugen ist es heute weit verbreitet, sie in sehr unterschiedlichen Ausstattungsvarianten anzubieten, z. B. mit unterschiedlichen Motoren und/oder Getrieben, mit oder ohne Klimaanlage und ähnliches mehr. Je nach Ausstattungsart und Ausstattungsumfang kann so das Gewicht der - äußerlich i. a. weitgehend identischen - Fahrzeuge sehr unterschiedlich sein; beim Volkswagen Golf kann die Vorderachs-Last z. B. je nach Ausstattung zwischen etwa 500 kg und 700 kg schwanken. Diese unterschiedlich großen Achslasten - aber nicht nur diese - machen den Einbau unterschiedlicher Feder/Dämpfer-Einrichtungen notwendig.

Dem Hersteller solcher Fahrzeuge werden daher entsprechend viele verschiedene Typen von Federbein- bzw. Dämpfer-Baueinheiten angeliefert, die "sortenrein" gelagert und jeweils zum richtigen Zeitpunkt passend zum jeweils gerade endmontierten Fahrzeug zur Fertigungsstraße geschafft werden müssen. An die Lager- und Steuerlogistik werden somit vergleichsweise hohe Anforderungen gestellt.

Die erfindungsgemäße karosserieseitige Lagerung stellt demgegenüber eine Lagerung dar, welche sich nicht nur durch ihre Montage und besondere Wartungsfreundlichkeit auszeichnet, sondern es auch ermöglicht, den die Federbeine bzw. Federdämpfer betreffenden Gesamtaufwand, insbesondere den logistischen Lager- und Fertigungsaufwand bei in größeren Serien, jedoch in vielfältigen Ausstattungsvarianten gefertigten Kraftfahrzeugen erheblich zu verringern.

Bei der erfindungsgemäßen karosserieseitigen Lagerung werden Federbein- bzw. Federdämpfer-Baueinheiten ohne fest aufgepreßte Gummi-Metall-Lager eingesetzt; das Federbein- bzw. Gummi-Metall-Lager wird jeweils erst bei der Endmontage des Federbeins bzw. des Federdämpfers unmittelbar vor dessen Einbau in die Fahrzeugkarosserie lose, d. h. ohne Preßsitz, auf das auf der Kolbenstange befestigte Axial-Rillenkugellager aufgesetzt. Die so entstandene Baueinheit wird dann in die zugehörige karosserieseitige Aufnahme bzw. den zugehörigen Lagerbock eingefahren und der Fangtopf auf das durch die Karosserie greifende Ende der Kolbenstange aufgeschraubt.

Der Funktionszusammenbau des Dämpfers mit dem Federbeinlager erfolgt also erst bei der Endmontage des Federbeins in einem Arbeitsgang mit dem Befestigen des Fangtopfes am in die Karosserie eingefahrene komplettierten Federbein.

In einfacher Weise können somit ansonsten gleiche Federbeine bzw. Federdämpfer unmittelbar an der Fertigungslinie den jeweiligen Erfordernissen verschiedener Ausstattungsvarianten angepaßt werden, indem z. B. bezüglich ihrer Einbauhöhe oder ihrer Federkennung unterschiedliche Gummi-Metall-Lager auf die einzubauenden Federbeine aufgesetzt werden.
Durch Einsatz neuartiger Gummi-Metall-Lager mit zum Blechaußentopf exzentrisch angeordnetem Blechinnentopf ergibt sich praktisch ohne Mehraufwand die Möglichkeit, die in der Fertigungslinie gefertigten Fahrzeuge in einfacher Weise bezüglich ihrer Achskinematik, z. B. bezüglich ihres Radnachlaufs und/oder ihrer Spreizachse unterschiedlichen Bedürfnissen entsprechend zu differenzieren, indem nämlich das unmittelbar vor Einbau des Federbeins lose aufgesetzte exzentrische Gummi-Metall-Lager den jeweiligen kinematischen Wünschen entsprechend bezüglich seiner Exzentrizität unterschiedlich ausgerichtet wird. Durch Verwendung solcher exzentrischen Gummi-Metall-Lager wäre es natürlich auch möglich, gegebenenfalls anfallende Lagetoleranzen der karossierseitigen Lageraufnahmen bzw. Lagerböcke auszugleichen.

Wollte man eine solche Differenzierung der Achskinematik mit herkömmlichen Federbeinen und karossierseitigen Federbeinlagerungen realisieren, dann müßten bei Verwendung konventioneller nicht exzentrischer Gummi-Metall-Lager räumlich entsprechend unterschiedlich angeordnete karosserieseitige Lageraufnahmen bzw. Lagerböcke vorgesehen werden. Bei Verwendung in konventioneller Weise im Preßsitz aufgepreßter neuartiger exzentrischer Gummi-Metall-Lager müßte dagegen eine zusätzliche Zahl entsprechend gestalteter kompletter Federbein-Baueinheiten vorrätig gehalten und gesteuert angeliefert werden.

Die Zahl der auf Lager zu haltenden und gesteuert zur Fertigungslinie zu bringenden Federbeinvarianten kann so in einfacher Weise erheblich reduziert werden.

Es ist augenscheinlich, daß es lager- und steuerungstechnisch von großem Vorteil ist, wenn zur Abdeckung sämtlicher Ausstattungsvarianten eines großserienmäßigen Fahrzeugtyps nicht - wie üblich - z. B. jeweils zehn komplette Federbein-Zusammenbauten, sondern statt dessen z. B. nur fünf Federbein-Teilzusammenbauten sowie zwei verschiedene Typen von Gummi-Metall-Lagern bevorratet und logistisch gehandhabt werden müssen, wobei die Gummi-Metall-Lager wegen ihrer im Vergleich zu den Federbein-Baueinheiten geringen Baugroße im allgemeinen sogar generell an der Fertigungslinie bevorratet werden könnten.

Ein weiterer wesentlicher Vorteil ergibt sich dadurch, daß die Gummi-Metall-Lager nicht mit Preßsitz auf dem Axial-Rillenkugellager sitzen. Im Falle eines Defekts kann das Gummi-Metall-Lager so in einfacher Weise ausgetauscht werden, was bei herkömmlicher Technik nicht ohne weiteres möglich ist.

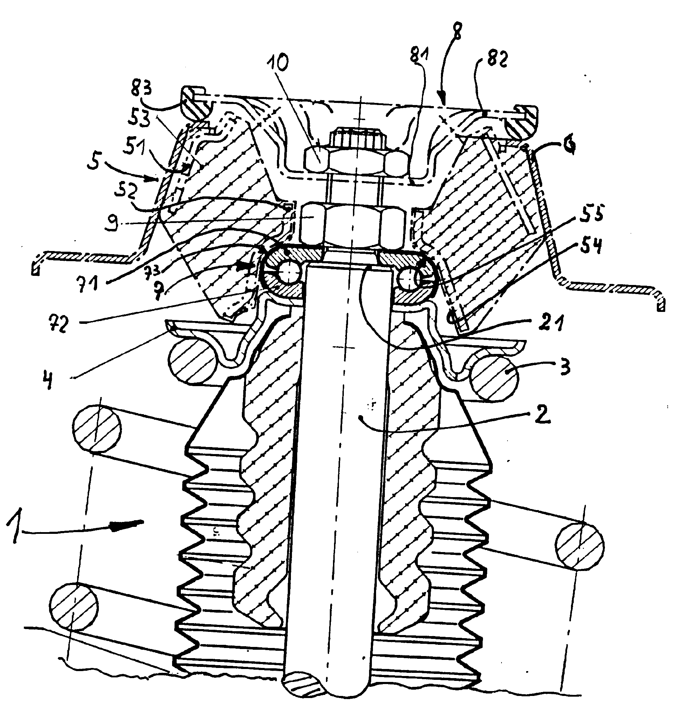

Anhand eines in der Zeichnung dargestellten Ausführungsbeispiels wird die Erfindung nachstehend näher erläutert.

Die einzige Figur der Zeichnung zeigt einen Längsschnitt durch die karosserieseitige Lagerung eines Federbeins gemäß der Erfindung im Stadium der Endmontage des Federbeins.

Vom Federbein 1 bzw. dem Federdämpfer des Fahrzeugs ist lediglich der für das Verständnis der Erfindung notwendige karosserieseitige Teil mit der Dämpfer-Kolbenstange 2 sowie der als Schraubenfeder 3 ausgebildeten Federbein-Federvorrichtung dargestellt. Das karosserieseitige Ende der Schraubenfeder 3 stützt sich in üblicher Weise an einem oberen Federteller 4 ab, der unter Zwischenschaltung eines Axial-Rillenkugellagers 7 auf der Dämpfer-Kolbenstange 2 gelagert ist. Die obere Lagerscheibe 71 des Axial-Rillenkugellagers 7 ist mittels einer Schraubenmutter 9 axial fest gegen einen Bund 21 der Dämpfer-Kolbenstange 2 gespannt und somit verdrehfest mit der Dämpfer-Kolbenstange 2 verbunden. An der zur oberen Lagerscheibe 71 relativ verdrehbaren unteren Lagerscheibe 72 des Axial-Rillenkugellagers stützt sich der obere Federteller 4 ab.

Auf die obere Lagerschebe 71 ist lose, d. h. ohne Preßsitz ein ansonsten im wesentlichen übliches Gummi-Metall-Lager 5 aufgelegt, dessen zwischen einem karosserieseitigen Blechaußentopf 51 und einem kolbenstangenseitigen Blechinnentopf 52 angeordnetes Gummielement 53 überwiegend auf Schub beanspruchbar ist. Die obere Lagerscheibe 71 besitzt im dargestellten Ausführungsbeispiel eine gut gerundete äußere Schulter 73, auf der der Blechinnentopf 52 mit einer korrespondierenden gut gerundeten Lageraufnahme 55 aufliegt, so daß sich das Axial-Rillenkugellager im Blechinnentopf 52 axial sowie radial abstützt bzw. umgekehrt.

Wenn der Blechinnentopf 52 des Gummi-Metall-Lagers 5 - wie im dargestellten Ausführungsbeispiel - auch innen zumindest in seinem mit der oberen Lagerscheibe 71 des Axial Rillenkugellagers in Berührung kommenden Bereichen mit einer vergleichsweise dünnen Schicht 54 aus Gummi oder gummiähnlichem Material ausgestattet ist, dann wird der Selbstzentrierungsefekt zwischen Axial-Rillenkugellager 7 und Gummi-Metall Lager 5 in einfacher Weise verbessert. Der Fertigungsaufwand für ein solcherart ausgebildetes Gummi-Metall-Lager ist im übrigen erheblich geringer als für konventionelle Federbeinlagerungen, bei denen das Gummi-Metall-Lager nicht lose aufgelegt, sondern bereits beim Hersteller des Federbeins mit Preßsitz mit der Dämpfer-Kolbenstange verbunden wird. Wegen des erforderlichen Preßsitzes werden dort zum einen von vornherein höhere Anforderungen an die Fertigungsgenauigkeit des Blechinnentopfes gestellt und zum anderen besondere Aufwendungen getrieben, um den auf das Axial-Rillenkugellager mit Preßsitz aufzubringenden Innenbereich des Blechinnentopfes gummifrei zu halten bzw. gummifrei zu machen. Im allgemeinen muß der Blechinnentopf innen extra gebürstet werden, um das Aufpressen des Blechtopfes auf das Axial-Rillenkugellager zu ermöglichen.

Im dargestellten Ausführungsbeispiel ist das mit dem lose aufgelegten Gummi-Metall-Lager 5 komplettierte kolbenseitige Federbeinende gerade in eine auf die Außenabmessungen des Gummi-Metall-Lagers 5 abgestimmte Lageraufnahme 6 der Fahrzeugkarosserie eingeführt und ein auf das durch die Lageraufnahme 6 hindurchgreifende freie Kolbenstangenende aufgesetzter metallischer Fangtopf 8 durch eine erst mit wenigen Umdrehungen aufgeschraubte Schraubenmutter 10 fixiert. Durch Anziehen der Schraubenmutter 10 wird der nur gestrichelt dargestellte Fangtopf 8 mit dem radial inneren Bereich seines Bodenteils 81 axial fest gegen das vom Axial-Rillenkugellager 7 abgekehrte freie Ende der ersten Schraubenmutter 9 gespannt; die Abmessungen der Schraubenmutter 9, des Gummi-Metall-Lagers 5, des Axial-Rillenkugellagers 7 sowie des Fangtopfes 8 sind dabei derart aufeinander abgestimmt, daß der radial äußere Bereich des Bodenteils 81 des Fangtopfes 8 gleichzeitig im Bereich des Blechinnentopfes des Gummi-Metall-Lagers derart zur Anlage gelangt, daß er den Blechinnentopf 52 axial fest auf die obere Lagerscheibe 71 des Axial-Rillenkugellagers 7 drückt.

In der zeichnerischen Darstellung liegt der am Topfrand 82 befestigte Gummiwulst 83 o. ä. karosserieseitig auf; es versteht sich, daß bei nach der Montage auf die Fahrbahn abgesenktem Fahrzeug zwischen diesem Gummiwulst und der Karosserie wie üblich ein gewisser axialer Abstand besteht.

## Patentansprüche

1. Karosserieseitige Lagerung eines Federbeins (1) oder Federdämpfers eines Kraftfahrzeuges,
a) mit einem auf der Dämpfer-Kolbenstange (2) gelagerten oberen Federteller (4) zur Abstützung des karosserieseitigen Endes der Federbein- oder Federdämpfer-Federvorrichtung (3);
b) mit einem aus einem karosserieseitigen Blechaußentopf (51), einem kolbenstangenseitigen Blechinnentopf (52) und einem dazwischen angeordneten, überwiegend auf Schub beanspruchbaren Gummielement (53) bestehenden Gummi-Metall-Lager (5);
c) mit einem Axial-Rillenkugellager (7), dessen obere Lagerscheibe (71) sich axial am Blechinnentopf (52) abstützt und an deren unteren Lagerscheibe (72) sich der obere Federteller (4) axial abstützt;
d) sowie mit einem mit seinem Bodenteil (81) auf das freie Ende der Dämpfer-Kolbenstange (2) aufgeschraubten metallischen Fangtopf (8), dessen Topfrand (82) das Gummi-Metall-Lager (5) - bei nicht völlig ausgefedertem Federbein mit axialem Abstand - radial übergreift, wobei
e) die obere Lagerscheibe (71) des Axial-Rillenkugellagers (7) mittels einer Schraubenmutter (9) o. ä. axial fest gegen einen Bund (21) der Dämpfer-Kolbenstange (2) gespannt ist,
f) das Gummi-Metall-Lager (5) mit seinem Blechinnentopf (52) ohne Preßsitz auf der oberen Lagerscheibe (71) des Axial-Rillenkugellagers (7) aufliegt, und
g) der metallische Fangtopf (8) fest gegen das vom Axial-Rillenkugellager (7) abgewandte Ende der Schraubenmutter (9) geschraubt ist, dadurch gekennzeichnet, daß
h) die obere Lagerscheibe (71) des Axial-Rillenkugellagers (7) sich ohne Preßsitz radial am Blechinnentopf (52) abstützt, und daß
i) Schraubenmutter (9), Gummi-Metall-Lager (5), Axial-Rillenkugellager (7) sowie Fangtopf (8) in ihren Abmessungen derart aufeinander abgestimmt sind, daß der Blechinnentopf (52) des Gummi-Metall-Lagers (5) vom radial äußeren Bereich des Bodenteils (81) des fest aufgeschraubten Fangtopfes (8) axial fest gegen die obere Lagerscheibe (71) des Axial-Rillenkugellagers (7) gespannt ist.

2. Karosserieseitige Lagerung nach Anspruch 1,
dadurch gekennzeichnet, daß zumindest die obere Lagerscheibe (71) des Axial-Rillenkugellagers (7) mit einer gut gerundeten äußeren Schulter (73) versehen ist, die in einer korrespondierenden gut gerundeten Lageraufnahme (55) des Blechinnentopfes (52) einliegt.

3. Karosserieseitige Lagerung nach Anspruch 2,
dadurch gekennzeichnet, daß die beiden Lagerscheiben (71, 72) des Axial-Rillenkugellagers (7) zwecks besserer Laufbahnumschließung kalottenartig ausgebildet sind.

4. Karosserieseitige Lagerung nach einem der Ansprüche 1 bis 3,
dadurch gekennzeichnet, daß der Blechinnentopf (52) des Gummi-Metall-Lagers (5) zumindest in seinem mit der oberen Lagerscheibe (71) des Axial-Rillenkugellagers (7) in Berührung kommenden Bereichen eine vergleichsweise dünne Schicht (54) aus Gummi oder einem Elastomer aufweist.

5. Karosserieseitige Lagerung nach einem der Ansprüche 1 bis 4,
gekennzeichnet durch ein Gummi-Metall-Lager (5), bei dem Blechinnentopf (52) und Blechaußentopf (51) exzentrisch zueinander angeordnet sind.

6. Verfahren zu Herstellung einer karosserieseitigen Lagerung eines Federbeins der in den Ansprüchen 1 bis 5 genannten Art,
dadurch gekennzeichnet, daß das Gummi-Metall-Lager (5) erst unmittelbar vor Einbau des Federbeins (1) bzw. des Federdämpfers in die Fahrzeugkarosserie lose auf die obere Lagerscheibe (71) des mittels der Schraubenmutter (9) o. ä. fest mit der Dämpfer-Kolbenstange (2) verbundenen Axial-Rillenkugelagers (7) aufgelegt wird, daß das so komplettierte Federbein (1) mit seinem das Gummi-Metall-Lager (5) tragenden Kolbenstangenende in eine karosserieseitige Lageraufnahme (Lagerbock, Lagerdom 6) für das Gummi-Metall-Lager (5) eingeführt wird, und daß anschließend der Fangtopf (8) auf das freie Ende der Dämpfer-Kolbenstange (2) aufgelegt und mittels einer auf die Kolbenstange aufgeschraubten weiteren Schraubenmutter (10) o. ä. axial fest einerseits - mit dem radial inneren Bereich seines Bodenteils (81) - gegen das vom Axial-Rillenkugellager (7) abgekehrte Ende der ersten Schraubenmutter (9) und andererseits - mit dem radial äußeren Bereich seines Bodenteils (81) - gegen das axial auf der oberen Lagerscheibe (71) des Axial-Rillenkugellagers (7) aufliegenden Gummi-Metall-Lager (5) gedrückt wird.

## Claims

1. Bodywork side mounting of a shock absorbing leg (1) or shock absorber of a motor vehicle,
a) having an upper spring plate (4) mounted on the shock absorber piston rod (2) for the purpose of supporting the bodywork end of the shock absorbing device (3) of the shock absorbing leg or shock absorber;
b) having a rubber-metal bearing (5) comprising a steel plate outer pot (51) on the bodywork side, a steel plate inner pot (52) on the piston rod side and arranged between the two a rubber element (53) which is substantially capable of withstanding stress;
c) having an axial-groove ball bearing (7) whose upper bearing disc (71) is supported axially on the steel plate inner pot (52) and the upper spring plate (4) is axially supported on the lower bearing disc (72);
d) and furthermore having a metallic collecting pot (8) which is screwed on by its base piece (81) to the free end of the shock absorber piston rod (2) and the edge (82) of the collecting pot engages radially over the rubber-metal bearing (5) with an axial spacing when the shock absorbing leg is not completely rebound, wherein,
e) the upper bearing disc (71) of the axial-groove ball bearing (7) is stressed axially in abutment with a band (21) of the shock absorbing piston rod (2), by means of a screwed nut (9) or the like,
f) the rubber-metal bearing (5) rests with its steel plate inner pot (52) without a press-fit on the upper bearing disc (71) of the axial-groove ball bearing (7), and
g) the metallic collecting pot (8) is screwed fixedly against the end of the screwed nut (9) remote from the axial-groove ball bearing (7), characterised in that,
h) the upper bearing disc (71) of the axial-groove ball bearing (7) is radially supported without a press-fit on the steel plate inner pot (52), and that
i) the dimensions of the screwed nut (9), the rubber-metal bearing (5), the axial-groove ball bearing (7) as well as of the collecting pot (8) are matched to each other in such a way that the steel plate pot (52) of the rubber-metal bearing (5) from the radial outer region of the base part (81) of the fixedly screwed-on collecting pot (8) is stressed axially in abutment with the upper bearing disc (71) of the axial-groove ball bearing (7).

2. Bodywork side mounting according to claim 1, characterised in that at least the upper bearing disc (71) of the axial-groove ball bearing (7) is provided with a well-rounded outer shoulder (73), which lies in a corresponding well-rounded bearing receiving device (55) of the steel plate inner pot (52).

3. Bodywork side mounting according to claim 2, characterised in that the two bearing discs (71, 72) of the axial-groove ball bearing (7) are formed in the shape of hemispheres for the purpose of enveloping the roller path in an improved manner.

4. Bodywork side mounting according to one of claims 1 to 3, characterised in that the steel plate inner pot (52) of the rubber-metal bearing (5) has a comparatively thin layer (54) comprising rubber or elastomer at least in its regions which come into contact with the upper bearing disc (71) of the axial-groove ball bearing (7).

5. Bodywork side mounting according to one of claims 1 to 4, characterised in that rubber-metal bearings (5) are arranged eccentric to each other in the case of the steel plate pot (52) and the steel plate outer pot (51).

6. Method for producing a bodywork side mounting of a shock absorbing leg of the type mentioned in claims 1 to 5, characterised in that directly prior to the installation of the shock absorbing leg (1) and/or of the shock absorber into the vehicle body, the rubber-metal bearing (5) is first placed loosely on the upper bearing disc (71) of the axial-groove ball bearing (7) fixedly connected by means of the screwed nut (9) or the like to the shock absorber piston rod (2), that the shock absorbing leg (1) assembled in this way is introduced with its piston rod end supporting the rubber-metal bearing (5) into a bearing receiving device (bearing block, bearing dome (6)) on the bodywork side for the rubber-metal bearing (5), and then finally the collecting pot (8) is placed on the free end of the shock absorbing piston rod (2) and by means of a further screwed nut (10) or the like, which is screwed on to the piston rod, is pushed axially fixed on the one side, with the radial inner region of its base part (81), against the end of the first screwed nut (9) remote from the axial-groove ball bearing (7) and on the other side with the radial outer region of its base piece (81) against the rubber-metal bearing (5) lying axially on the upper bearing disc (71) of the axial-groove ball bearing (7).

## Revendications

1. Agencement de support au niveau de la carrosserie d'une jambe (1) de suspension ou d'un amortisseur à ressort d'une automobile,
a) comprenant une coupelle supérieure (4) de ressort reposant sur la tige de piston de l'amortisseur, destinée à supporter l'extrémité située du côté de la carrosserie du dispositif (3) de jambe de suspension ou d'amortisseur à ressort;
b) comprenant un support métallo-caoutchouc (5) composé d'une cuvette extérieure (51) en tôle, située du côté de la carrosserie, d'une cuvette intérieure (52) en tôle, située du côté de la tige de piston, et d'un élément (53) en caoutchouc disposé entre ces cuvettes, sollicité principalement en poussée;
c) comprenant un roulement axial rainuré (7) à billes, dont la bague supérieure (71) de roulement s'appuie axialement sur la cuvette intérieure (52) en tôle, et dont la bague inférieure (72) de roulement est une bague sur laquelle s'appuie axialement la coupelle supérieure (4) de ressort;
d) et comprenant une cuvette métallique (8) de butée dont le fond (81) est vissé sur l'extrémité libre de la tige (2) de piston de l'amortisseur et dont le bord (82) recouvre radialement le support métallo-caoutchouc, avec un certain espacement axial rainuré lorsque la jambe de suspension n'est pas complètement détendue,
e) la bague supérieure (71) de roulement du roulement axial rainuré (7) à billes étant serrée axialement fermement contre un épaulement (21) de la tige (2) de piston de l'amortisseur, au moyen d'un écrou à vis (9) ou similaire,
f) le support métallo-caoutchouc (5) reposant, par sa cuvette intérieure (52) en tôle, sans serrage sur la bague supérieure (71) de roulement du roulement axial rainuré (7) à billes, et
g) la cuvette métallique (8) de butée étant vissée fermement contre l'extrémité de l'écrou à vis (9), qui est orientée à l'opposé du roulement axial rainuré (7) à billes,
caractérisé en ce que
h) la bague supérieure (71) de roulement du roulement axial rainuré (7) à billes s'appuie sans serrage radialement sur la cuvette intérieure (52) en tôle, et en ce que
i) les dimensions de l'écrou à vis (9), du support métallo-caoutchouc (5), du roulement axial rainuré (7) à billes ainsi que de la cuvette (8) de butée sont adaptées les unes aux autres de telle sorte que la cuvette intérieure (52) en tôle du support métallo-caoutchouc (5) soit bridée axialement fermement contre la bague supérieure (71) de roulement du roulement axial rainuré (7) à billes, par l'intermédiaire de la zone radialement extérieure du fond (81) de la cuvette (8) de butée vissée en place.

2. Agencement de support au niveau de la carrosserie selon la revendication 1,
caractérisé en ce qu'au moins la bague supérieure (71) de roulement du roulement axial rainuré (7) à billes est pourvue d'une épaule bien arrondie (73), qui s'insère dans un récepteur correspondant (55) de support, bien arrondi, de la cuvette intérieure (52) en tôle.

3. Agencement de support au niveau de la carrosserie selon la revendication 2,
caractérisé en ce que les deux bagues (71, 72) de roulement du roulement axial rainuré (7) à billes sont réalisées sous forme de calottes, afin de permettre une meilleure fermeture des chemins de roulement.

4. Agencement de support au niveau de la carrosserie selon l'une des revendications 1 à 3,
caractérisé en ce que la cuvette intérieure (52) en tôle du support métallo-caoutchouc (5) présente une couche relativement mince (54) de caoutchouc ou d'un élastomère garnissant au moins les zones de la cuvette qui entrent en contact avec la bague supérieure (71) de roulement du roulement axial rainuré (7) à billes.

5. Agencement de support au niveau de la carrosserie selon l'une des revendications 1 à 4,
caractérisé par un support métallo-caoutchouc (5), dans lequel les cuvettes intérieure (52) et extérieure (51) sont disposées de façon excentrée l'une par rapport à l'autre.

6. Procédé de fabrication d'un agencement de support, au niveau de la carrosserie, d'une jambe de suspension, du genre mentionné dans les revendications 1 à 5, caractérisé en ce que le support métallo-caoutchouc (5) n'est mis en place librement sur la bague supérieure (71) de roulement du roulement axial rainuré (7) à billes relié fermement à la tige (2) de piston de l'amortisseur au moyen d'un écrou à vis (9) ou similaire, que juste avant l'installation de la jambe (1) de suspension ou de l'amortisseur à ressort dans la carrosserie du véhicule,
en ce que la jambe (1) de suspension ainsi complétée est introduite, par l'extrémité de sa tige de piston d'amortisseur, qui porte le support métallo-caoutchouc (5), dans un récepteur du support situé au niveau de la carrosserie (chaise de support, dôme 6 de support), prévu pour le support métallo-caoutchouc (5), et
en ce que la cuvette (8) de butée est ensuite mise en place sur l'extrémité libre de la tige (2) de piston de l'amortisseur et est serrée axialement, au moyen d'un autre écrou à vis (10) ou similaire vissé sur la tige de piston, contre l'extrémité du premier écrou à vis (9) d'une part, extrémité qui est orientée à l'opposé du roulement axial rainuré (7) à billes - par l'intermédiaire de la partie radialement intérieure du fond (81) de la cuvette - et contre le support métallo-caoutchouc (5) d'autre part, reposant axialement sur la bague supérieure (71) de roulement du roulement axial rainuré (7) à billes - par l'intermédiaire de la zone radialement extérieure du fond (81) de la cuvette.
